# EUROPÄISCHE PATENTSCHRIFT

(11) **EP 0 541 639 B1**
(45) Veröffentlichungstag und Bekanntmachung des Hinweises auf die Patenterteilung: **17.05.1995**
(21) Anmeldenummer: 91913958.4
(22) Anmeldetag: 31.07.1991
(51) Int. Cl.: A61C 5/12

(54) **VORRICHTUNG ZUM FORMEN VON ZAHNFÜLLUNGEN UND VERFAHREN ZU IHRER HERSTELLUNG**
DEVICE FOR MOULDING DENTAL FILLINGS AND PROCESS FOR MANUFACTURING THE DEVICE
DISPOSITIF DE MOULAGE DE PLOMBAGES POUR DENTS ET SON PROCEDE DE FABRICATION

(30) Priorität: 04.08.1990 DE 4024865
(43) Veröffentlichungstag der Anmeldung: 19.05.1993
(73) Patentinhaber: KASTNER, Dietgart, D-71636 Ludwigsburg (DE)
(72) Erfinder: KASTNER, Dietgart, D-71636 Ludwigsburg (DE)
(74) Vertreter: Kastner, Hermann, Dipl.-Ing. Patentanwalt
(86) Internationale Anmeldenummer: EP9101433
(87) Internationale Veröffentlichungsnummer: WO9202188

(56) Entgegenhaltungen:
- EP-A- 0 087 022
- WO-A-85/01434

## Beschreibung

Beim Herstellen Von Zahnfüllungen, insbesondere im Frontzahnbereich, mit Hilfe pastöser aushärtbarer Füllungsmaterialien wurder bisher streifenförmige Vorrichtungen zum Formen der Füllungen verwendet, die im folgenden kurz als Formungsstreifen bezeichnet werden. Diese Formungsstreifen werden in den Zwischenraum zwischen dem zu behandelnden Zahn und dem Nachbarzahn eingeführt und beidseits um den zu behandelnden Zahn so herumgelegt, daß diejenige Seite des Zahns vom Formungsstreifen außen umgeben ist, an der sich die zu füllende Kavität befindet. Zum Einbringen des Füllungsmaterials wird einer der beiden Streifenschenkel wieder vom Zahn zurückgeschwenkt und das Füllungsmaterial in die Kavität hineingedrückt. Anschließend wird der weggeschwenkte Streifenschenkel wieder an den Zahn herangeschwenkt und der Formungsstreifen an beiden Streifenschenkeln straffgezogen, so daß das Füllungsmaterial diejenige Form annimmt, die der Formungsstreifen aufgrund seiner Anlage an dem erhaltenen Zahnbereich in der Umgebung der Kavität einnimmt.

Dieses Füllungsverfahren läßt sich in den Fällen zufriedenstellend anwenden, bei denen die zu füllende Kavität in dem Bereich zwischen der freien Zahnkante und dem Zahnhals liegt. Dann wird das in die Kavität eingefüllte Füllungsmaterial ringsum einerseits von dem die Kavität umgebenden erhaltenen Teil des Zahns und andererseits von dem die Kavität überdeckenden Formungsstreifen vollständig eingeschlossen.

Wenn jedoch die Kavität sich bis zur Kante oder bis zur Kaufläche des betreffenden Zahns hin erstreckt und die Zahnkante bzw. die Kaufläche zumindest teilweise, wenn nicht vollständig, fehlt, dann quillt das Füllungsmaterial beim Herumlegen des Formungsstreifens um den Zahn an der vom Formungsstreifen nicht abgedeckten Stelle heraus. Dadurch entsteht entweder ein mehr oder weniger formloser Überstand des Füllungsmaterials über den angestrebten Umriß des Zahnes, oder der Formungsstreifen kann wegen der fehlenden Anlage im Bereich der fehlenden Kante in den angestrebten Umriß der Füllung hineingezogen werden, so daß dort ein Mangel des Füllungsmaterials eintritt, der einen Unterschnitt der Füllung gegenüber der angestrebten Füllungsform zur Folge hat. Diese Mängel lassen sich nachträglich kaum oder allenfalls unter großem Aufwand und großer Mühe beseitigen. Oftmals bleibt nur übrig, die mißlungene Füllung wieder zu entfernen und einen neuen Füllungsversuch zu unternehmen. Dabei kann jedoch nicht ausgeschlossen werden, daß auch der neuerliche Versuch mißlingt.

Bei größeren Kavitäten, insbesondere bei solchen mit größerem Kanten- und/oder Kauflächendefekt, kann auch der Fehler auftreten, daß der Formungsstreifen wegen der mangelnden Anlage sich in sich verformt und die dabei zustandekommende Füllung wiederum nicht die gewünschte Formgebung erreicht. Das kann insbesondere im Frontzahnbereich zu sehr unschönen Ergebnissen führen:

Zur Vermeidung dieser Nachteile bei der Verwendung von Formungsstreifen ist es bekannt, Formungshülsen zu verwenden. Diese Formungshülsen sind vorgefertigte Hohlformen, deren Innenraum ein Negativbild eines Frontzahns oder eines Backenzahns darstellt. Diese Formungshülsen gibt es in verschiedenen Größenstufen.

Die Formungshülsen werden in der Weise verwendet, daß in demjenigen Bereich des Innenraumes der der Kavität am Zahn entspricht, das Füllungsmaterial eingefüllt wird und die Formungshülse auf den zu behandelnden Zahn aufgeschoben wird. Um Fehlstellen zu vermeiden, wird das Füllungsmaterial mit einem gewissen Überschuß eingefüllt. Der Überschuß quillt beim Aufschieben der Formungshülse aus dieser heraus und wird danach entfernt. Die auf dem Zahn sitzende Formungshülse muß in der Regel wenigstens so lange festgehalten werden, bis das Füllungsmaterial annähernd ausgehärtet ist. Sie kann ausnahmeweise dann einmal vorher losgelassen werden, wenn sie sehr stramm auf dem Zahn sitzt. Das gilt sowohl dann, wenn der Aushärtevorgang von allein einsetzt und abläuft, wie auch dann, wenn eine Aushärtehilfe, z.B. in Form einer Bestrahlung, angewendet wird, um den Aushärtevorgang einzuleiten und/oder für das Durchhärten zu sorgen.

Diese Formungshülsen werden als Ziehteile oder Preßteile hergestellt. Sie haben nicht zuletzt wegen dieses Herstellungsverfahrens eine verhältnismäßig große Wanddicke. Sie lassen sich deshalb, im Gegensatz zu den Formungsstreifen mit verhältnismäßig geringer Wanddicke, nur dann verwenden, wenn zwischen dem zu behandelnden Zahn und seinen beiden Nachbarzähnen ein ausreichend weiter Zwischenraum vorhanden ist. Bei zu engen Zwischenräumen lassen sich die Formungshülsen allenfalls dann noch verwenden, wenn es gelingt, den Nachbarzahn des zu engen Zwischenraumes wegzudrücken. Wenn das nicht möglich ist, bleibt nur das Abschleifen eines oder beider Zähne zu beiden Seiten des Zwischenraumes.

Die Formungshülsen werden hauptsächlich aus wirtschaftlichen Gründen nur in einer beschränkten Anzahl Größenvarianten und Formvarianten hergestellt. Deshalb können sie nur bei einer beschränkten Anzahl der Anwendungsfälle genau passen. Bei den übrigen Anwendungsfällen muß man notgedrungen gewisse Abweichungen der Negativform des Füllungsmaterials gegenüber dem zu behandelnden Zahn hinnehmen. Dann kann man in manchen Fällen nachträglich mit zusätzlichem Aufwand das ästhetische Ergebnis der Zahnfüllung verbessern. Bei nicht genau passender Größe lassen die Formungshülsen sich in beschränktem Ausmaß zurechtschneiden. Das kann aber immer nur bei dem Teil der Formungshülse geschehen, die dem Zahnhals zugekehrt ist. Die Formungshülse kann also nur gekürzt werden.

Ungeachtet der Beschränkung der Größenvariationen und Formvariationen sind die Formungshülsen verhältnismäßig teuer. Der hohe Preis und die oben geschilderten Mängel bei der Paßgenauigkeit und die Schwierigkeiten bei der Überwindung dieser Mängel stehen einer Anwendung der Formungshülsen in größerem Umfange entgegen.

Eine Zwischenstellung zwischen den einfachen Formungsstreifen und den ringförmig geschlossenen Formungshülsen nehmen Formungsvorrichtungen ein (WO 85/01434), die eine Abwandlung der Formungshülsen darstellen. Bei ihnen ist von einer der zuvor beschriebenen Formungshülsen der linguale oder der vestibuläre Abschnitt der Umfangswand weggelassen und an den freien Enden des Hülsenteils je ein streifenförmiger Spannteil angeschlossen. Auf der Innenseite der verbliebenen drei Wandabschnitte ist der hülsenförmige Teil wiederum auf die anatomischen Formmerkmale eines betimmten Zahntyps abgestimmt, d.h. als dessen Negativform ausgebildet. Zwischen dem hülsenförmigen Teil und den beiden Spannteilen ist in einigen Fällen die Umfangswand zusätzlich halsartig eingezogen. Diese Formungsvorichtungen, die man auch als 3/4-Formungshülsen bezeichnen könnte, werden ähnlich den ringförmig geschlossenen Formungshülsen als Ziehteile hergestellt. Sie weisen weitestgehend die gleichen Nachteile wie die ringförmigen Formungshülsen auf, nämlich die starre Formgebung mit engen Toleranzen hinsichtlich der Maße und die verhältnismäßig große Wanddicke. Bei ihnen ist lediglich möglich, daß sie auf der Seite der Spannteile geringfügig aufgeweitet oder verengt werden können. Das erleichtert allenfalls das Anlegen und Abnehmen der Formungsvorrichtung. Hinsichtlich der starren Formbindung der verbliebenen Wandteile bringt es keine Verbesserung.

Bei diesen Formungsvorrichtungen kommt als weiterer Nachteil hinzu, daß die Spannteile in der Regel zur lingualen Seite hin, also zur Mundhöhle hin, ausgerichtet sind und nur im Frontzahnbereich in einigen Fällen auch zur vestibulären Seite hin, also zur Außenseite hin, ausgerichtet sind. Das Anspannen der Spannteile und das Fixieren mittels einer Dentalpinzette bereitet in der Mundhöhle erhebliche Schwierigkeiten und ist in ungünstigen Fällen sogar unmöglich.

Der Erfindung liegt die Aufgabe zugrunde, eine Vorrichtung zum Formen von Zahnfüllungen zu schaffen, die bessere Formungsmöglichkeiten als die Formungsstreifen bietet und die bei der Anwendung geringere Schwierigkeiten als bei den ringförmig geschlossenen Formungshülsen und den 3/4-Formungshülsen nach sich zieht. Diese Aufgabe wird durch eine Vorrichtung mit den im Anspruch 1 oder 2 angegebenen Merkmalen gelöst. Diese Vorrichtung wird im folgenden als Formungsvorrichtung bezeichnet.

Dadurch, daß die Formungsvorrichtung nach Anspruch 1 von einem ursprünglich ebenen streifenförmigen Zuschnitt ausgeht, aus dem durch Abbiegen oder Umbiegen oder durch Falten seiner Teile die Formungsvorrichtung gebildet wird, läßt die Formungsvorrichtung sich verhältnismäßig dünnwandig ausbilden, so daß sie auch bei sehr engen Zahnzwischenräumen verwendet werden kann. Durch diese Ausbildung aus ursprünglich ebenen Flächenabschnitten, die ohne besondere Formungsmerkmale U-förmig angeordnet sind, läßt die Formungsvorrichtung sich bei Zähnen gleicher Art nahezu ohne Berücksichtigung deren Ausdehnung in Richtung der Mittelachse der U-Form der Formungsvorrichtung verwenden. Bei der Formungsvorrichtung kommt man also mit wesentlich weniger Formvarianten und Größenvarianten aus, als das bei den geschlossenen Formungshülsen und den 3/4-Formungshülsen der Fall ist. Außerdem kann durch diese Ausbildung die Formungsvorrichtung in der Regel so eingesetzt werden, daß ihre Spannstreifen parallel zu der Zahnreihe ausgerichtet sind, so daß nach dem Anziehen der Formungsvorrichtung ihre Spannstreifen mittels üblicher Klemmvorrichtungen an den benachbarten Zähnen festgeklemmt werden können und die Formungsvorrichtung nicht bis zum Aushärten des Füllungsmaterials festgehalten werden muß.

Die Formungsvorrichtung nach Anspruch 2 hat die gleichen Eigenschaften, wie sie zuvor beschrieben wurden. Dadurch, daß sie von zwei ursprünglich ebenen Zuschnitten ausgeht, läßt sie sich leichter mit größerem Trogteil ausbilden, wie er bei Formungsvorrichtungen erforderlich ist, die vorwiegend im Backenzahnbereich eingesetzt werden.

Durch eine Ausgestaltung nach Anspruch 3 wird die Fertigung der Formungsvorrichtung vor allem für keilförmige Zahnformen erleichtert.

Der Erfindung liegt auch die Aufgabe zugrunde, Verfahren zum Herstellen der Formungsvorrichtung anzugeben, mit denen auf einfache und rationelle Weise die Formungsvorrichtung hergestellt werden kann. Diese Aufgabe wird durch ein Verfahren nach Anspruch 4 oder nach Anspruch 5 gelöst.

Eine Weiterbildung der Verfahren nach Anspruch 6 vereinfacht und erleichtert vor allem das Verbinden des Flächenabschnittes für den Boden des Trogteils mit dessen Umfangswand. Durch die Anwendung eines Ultraschall-Schweißverfahrens in Verbindung mit dem anschließenden Zusammenpressen der Schweißbacken wird trotz der zunächst erfolgenden Überlappungen bestimmter Flächenteile ein Trogteil mit absatzlosen Wandabschnitten von gleicher Wanddicke erreicht.

Im folgenden wird die Erfindung anhand einiger in der Zeichnung dargestellter Ausführungsbeispiele näher erläutert. Es zeigen:
- Fig. 1: eine perspektivische Ansicht einer Formungsvorrichtung;
- Fig. 2: eine Draufsicht der Formungsvorrichtung nach Fig. 1;
- Fig. 3: eine Stirnansicht der Formungsvorrichtung nach Fig. 1;
- Fig. 4: einen Aufriß eines Zuschnittes für die Formungsvorrichtung nach Fig. 1;
- Fig. 5: eine Draufsicht des Zuschnittes nach Fig. 4;
- Fig. 6: eine Seitenansicht des Zuschnittes nach einem ersten Faltvorgang;
- Fig. 7: einen Querschnitt des Zuschnittes nach der Schnittverlaufslinie A - A in Fig. 6;
- Fig. 8: eine Seitenansicht des Zuschnittes nach einem zweiten Faltvorgang;
- Fig. 9: einen Querschnitt des Zuschnittes nach der Schnittverlaufslinie B - B in Fig. 8;
- Fig. 10: eine Seitenansicht der nach einer Schweißung des Zuschnittes fertigen Formungsvorrichtung;
- Fig. 11: einen Querschnitt der Formungsvorrichtung nach der Schnittverlaufslinie C - C in Fig. 10;
- Fig. 12: einen Aufriß eines Zuschnittes für ein zweites Ausführungsbeispiel der Formungsvorrichtung;
- Fig. 13: eine Seitenansicht des Zuschnittes nach einem ersten Faltvorgang;
- Fig. 14: eine Ansicht des Zuschnittes gemäß dem Pfeil X in Fig. 13;
- Fig. 15: eine Seitenansicht des Zuschnittes nach einem weiteren Faltvorgang;
- Fig. 16: einen Querschnitt des Zuschnittes nach der Schnittverlaufslinie D - D in Fig. 15;
- Fig. 17: eine Seitenansicht des Zuschnittes nach einem weiteren Faltvorgang;
- Fig. 18: einen Querschnitt des Zuschnittes nach der Schnittverlaufslinie E - E in Fig. 17;
- Fig. 19: eine Seitenansicht der nach einer Schweißung fertiggestellten Formungsvorrichtung;
- Fig. 20: einen Querschnitt der Formungsvorrichtung nach der Schnittverlaufslinie F - F in Fig. 19;
- Fig. 21a: je einen Aufriß je eines Zuschnittes für ein
- Fig. 21b: weiteres Ausführungsbeispiel der Formungsvorrichtung;
- Fig. 22: eine Seitenansicht des Zuschnittes nach Fig. 21a nach einem ersten Faltvorgang und des daran angelegten zweiten Zuschnittes nach Fig. 21b;
- Fig. 23: eine Draufsicht beider Zuschnitte nach Fig. 22;
- Fig. 24: einen Querschnitt der beiden Zuschnitte nach der Schnittverlaufslinie G - G in Fig. 23;
- Fig. 25: eine Seitenansicht der beiden Zuschnitte nach einem weiteren Faltvorgang;
- Fig. 26: einen Querschnitt beider Zuschnitte nach der Schnittverlaufslinie H - H in Fig. 25;
- Fig. 27: eine Seitenansicht der nach einer Schweißung fertiggestellten Formungsvorrichtung;
- Fig. 28: einen Querschnitt der Formungsvorrichtung nach der Schnittverlaufslinie I - I in Fig. 27.

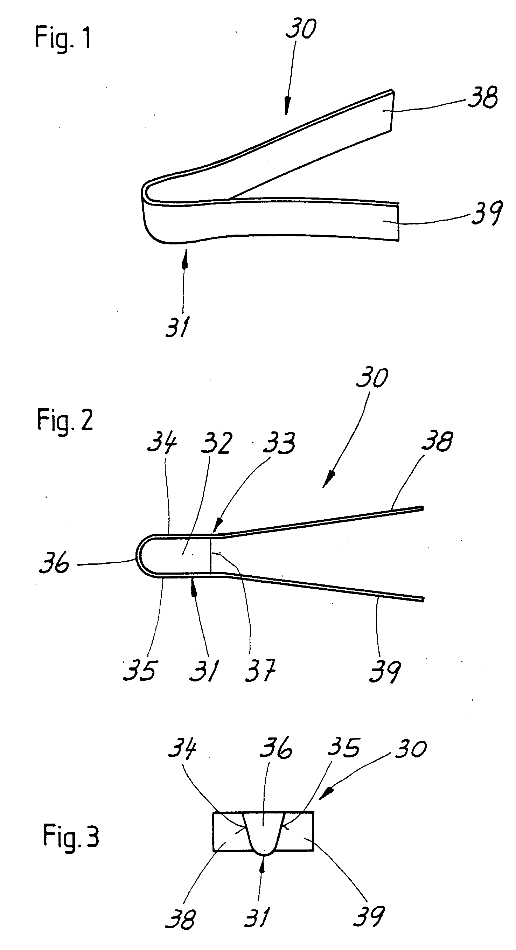

Die aus Fig. 1 bis 3 ersichtliche Vorrichtung zum Formen von Zahnfüllungen, die im folgenden kurz als Formungsvorrichtung 30 bezeichnet wird, weist einen Trogteil 31 auf, der durch einen Boden 32 und eine Umfangswand 33 gebildet wird. Am unteren Rand geht die Umfangswand 33 stetig in den Boden 32 über.

Bei der Umfangswand 33 kann man drei Abschnitte 34 ... 36 unterscheiden, die nahtlos und absatzlos ineinander übergehen. Die beiden Abschnitte 34 und 35 verlaufen zumindest in Bezug auf ihre Grundrißprojektion parallel zueinander und liegen daher einander gegenüber. Der dritte Abschnitt 36, der einen mehr oder minder kreisbogenförmigen Grundrißverlauf hat, verbindet die beiden Abschnitte 34 und 35 miteinander. An der dem mittleren Abschnitt 36 gegenüberliegenden Seite des Trogteils 31 ist die Umfangswand 33 unterbrochen. Dort weist demnach der Trogteil 31 die offene Stelle 37 auf. Die Richtung von dem mittleren Abschnitt 36 der Umfangswand 33 zur offenen Stelle 37 hin, oder umgekehrt, wird im folgenden als Längsrichtung des Trogteils 31 und damit der gesamten Formungsvorrichtung 30 bezeichnet.

Am Ende des Trogteils 31 schließen an die Enden der Abschnitte 34 und 35 je ein streifenförmiger Spannteil 38 bzw. 39 an. Die beiden Spannteile 38 und 39 haben zumindest annähernd die gleiche Höhe wie die Umfangswand 33.

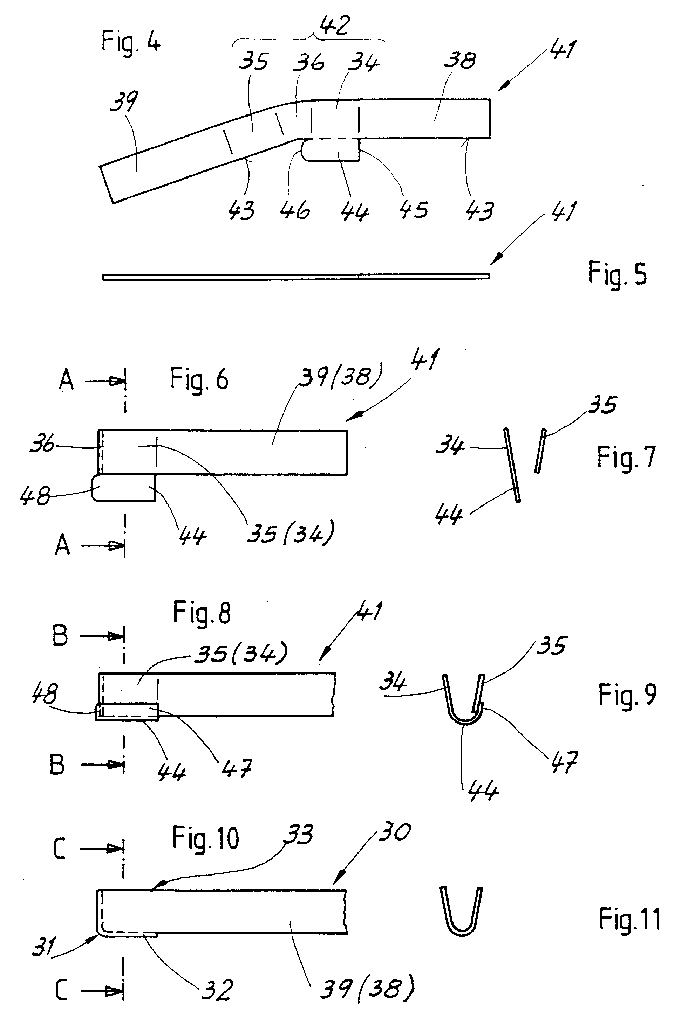

Die Formungsvorrichtung 30 ist aus einem zumindest näherungsweise streifenförmigen Zuschnitt 41 aus einer Folie eines durchsichtigen thermoplastischen Kunststoffes hergestellt (Fig. 4 und 5).

Die in der Mitte des Zuschnittes 41 gelegenen Längenabschnitte, aus denen die Abschnitte 34 ... 36 der Umfangswand 33 hervorgehen, werden im folgenden der besseren Übersicht wegen mit denselben Nummern versehen und als Längenabschnitte 35 ... 36 bezeichnet. Sie bilden zusammen den Mittelteil 42 des Zuschnittes 41. Diese Längenabschnitte gehen stetig ineinander über. In Fig. 4 sind sie nur der besseren Übersicht wegen durch Trennungslinien gegeneinander abgegrenzt, die in Wirklichkeit nicht vorhanden sind.

Der Mittelteil 42 hat eine Höhe, die zumindest annähernd gleich der Höhe der Umfangswand 33 des Trogteils 31 ist.

Wie aus Fig. 4 ersichtlich ist, hat der mittlere Längenabschnitt 36 des Mittelteils 42 zumindest annähernd die Form eines Kreisringabschnittes. Dadurch sind die beiderseits an ihm anschließenden beiden Längenabschnitte 34 und 35 und die daran wiederum anschließenden Spannteile 38 bzw. 39 bei der ebenen Ausbreitung des Zuschnittes 41 (Fig. 4 und 5) um einen gewissen Winkel zueinander geneigt.

An dem Längenabschnitt 34 des Mittelteils 42 schließt am unteren Rand 43 ein zusätzlicher Flächenabschnitt 44 an, aus dem der Boden 32 des Trogteils 31 gebildet wird. Dieser Flächenabschnitt 44 hat in der Längsrichtung des Zuschnittes 41 eine Länge, die um ein bestimmtes Maß größer als die Länge des Bodens 32 ist, und zwar gemessen vom hinteren Rand 45 des Flächenabschnittes 44 aus, der mit dem Ende des Längenabschnittes 34 des Mittelteils 42 fluchtet. Der hintere Rand 45 ist gerade. Der vordere Rand 46 hat einen gekrümmten Verlauf, und zwar im allgemeinen einen zumindest näherungsweise kreisbogenförmigen Verlauf. Der Flächenabschnitt 44 hat in der Richtung senkrecht zum Rand 43 des Zuschnittes 41 eine Abmessung, die um ein bestimmtes Maß größer als die in der gleichen Richtung gemessene Breite des Bodens 32 des Trogteils 31 ist.

Im folgenden wird anhand Fig. 6 ... 11 der Fertigungsablauf zur Herstellung der Formungsvorrichtung 30 aus dem Zuschnitt 41 erläutert.

Zunächst wird der eine Schenkel des Zuschnittes 41, beispielsweise derjenige mit dem Flächenabschnitt 35 und dem Spannteil 39, vorzugsweise um ein Formwerkzeug herum umgebogen oder umgefaltet, bis diese beiden Flächenabschnitte bezüglich ihrer Grundrißprojektion parallel zum Flächenabschnitt 34 und dem Spannteil 38 ausgerichtet sind (Fig. 6). Infolge der Kreisringabschnittform des mittleren Flächenabschnittes 36 stehen dabei die beiden Flächenabschnitte 34 und 35 und auch die anschließenden Spannteile 38 und 39 unter einem gewissen Winkel schräg zueinander (Fig. 7).

In einem zweiten Schritt wird der am Längenabschnitt 34 anschließende zusätzliche Flächenabschnitt 44 zu dem gegenüberliegenden Längenabschnitt 35 hin umgebogen. Derjenige Flächenteil 47 des zusätzlichen Flächenabschnittes 44, der über den unteren Rand des Längenabschnittes 35 hinausragt, wird weiter umgebogen, bis er an der Außenseite dieses Längenabschnittes 35 anliegt (Fig. 8 und 9). In gleicher Weise wird der Flächenteil 48, der am Flächenabschnitt 44 nach vorn über den vorderen Rand des umgebogenen Längenabschnittes 36 hinausragt (Fig. 6), zu dem ihm benachbarten Längenabschnitt 36 hin so weit umgebogen, daß er daran anliegt (Fig. 8).

In einem letzten Verfahrensschritt werden die Flächenteile 47 und 48 mit dem ihnen jeweils benachbarten Längenabschnitt 35 bzw. 36 fest verbunden. Zweckmäßigerweise wird für dieses Verbinden ein Ultraschall-Schweißverfahren angewandt, bei dem die auf die Außen- bzw. Innenform des Trogteils 31 abgestimmten Schweißbacken nach dem Erweichen des Werkstoffes an den Schweißstellen so weit zusammengepreßt werden, daß zwischen ihnen ein lichter Abstand verbleibt, der zumindest annähernd gleich der gewünschten Wanddicke des Trogteils 31 ist. Dadurch verschwinden die Doppelungen durch die Flächenteile 47 und 48 und der Trogteil 31 erhält eine glatte Wandung ohne Absätze und Stufen, wie es aus Fig. 10 und 11 zu ersehen ist. Damit ist die Formungsvorrichtung 30 fertig.

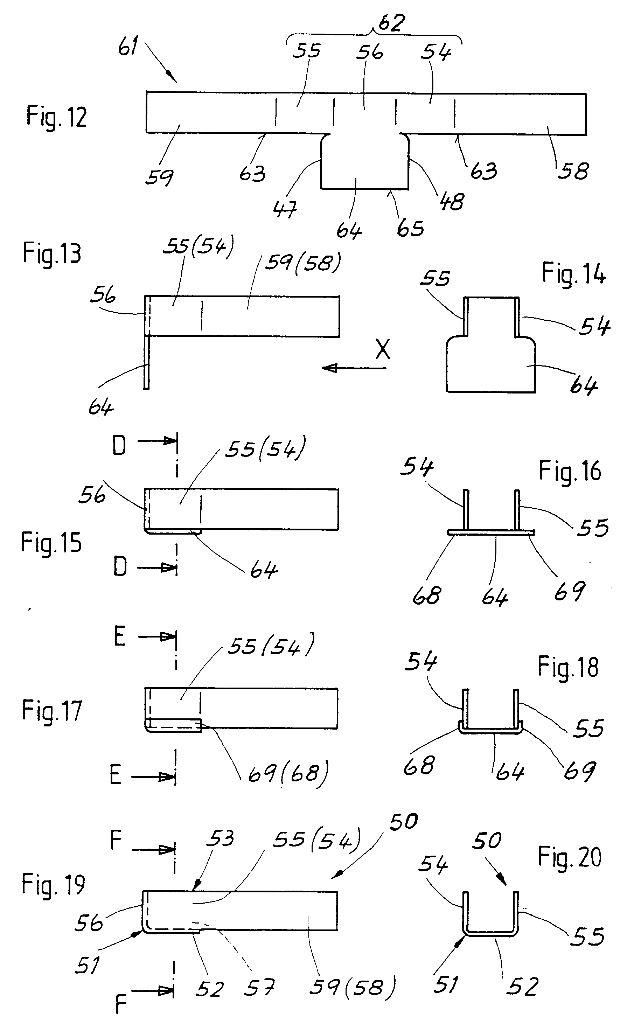

Die Formungsvorrichtung 30 ist wegen der Keilform des Innenraumes ihres Trogteils 31 (Fig. 11) besonders für den Einsatz beim Füllen von Schneidezähnen geeignet. Anhand Fig. 12 ... 20 wird mit der Formungsvorrichtung 50 eine Ausführungsform näher erläutert, die besonders für den Einsatz beim Füllen von Backenzähnen geeignet ist.

Die Formungsvorrichtung 50 ist weitgehend gleich der Formungsvorrichtung 30 ausgebildet. Soweit im folgenden Einzelheiten der Formungsvorrichtung 50 nicht näher beschrieben sind, ist davon auszugehen, daß sie gleich oder zumindest ähnlich den entsprechenden Teilen der Formungsvorrichtung 30 ausgebildet sind.

Die Formungsvorrichtung 50 weist einen Trogteil 51 mit einem Boden 52 auf, der von einer Umfangswand 53 umgeben ist. Bei der Umfangswand 53 kann man wiederum drei Abschnitte 54, 55 und 56 unterscheiden. An der dem stirnseitigen Abschnitt 56 gegenüberliegenden Ende des Trogteils 51 fehlt die Umfangswand 53, so daß dort der Trogteil 51 wiederum eine offene Stelle 57 hat. An die beiden Abschnitte 54 und 55 schließt je ein Spannteil 58 bzw. 59 an.

Die Formungsvorrichtung 50 ist aus einem zumindest näherungsweise streifenförmigen Zuschnitt 61 hergestellt (Fig. 12).

Die in der Mitte des Zuschnittes 61 gelegenen Längenabschnitte 54 ... 56, aus denen die entsprechenden Abschnitte der Umfangswand 53 hervorgehen, bilden wiederum zusammen den Mittelteil 62 des Zuschnittes 61.

Der mittlere Längenabschnitt 56 hat eine rechteckige Aufrißform. Dadurch schließen zu seinen beiden Seiten die Längenabschnitte 54 und 55 und die daran wiederum anschließenden Spannteile 58 und 59 in gerader Linie an ihn an.

An dem mittleren Lägenabschnitt 56 schließt am unteren Rand 63 ein zusätzlicher Flächenabschnitt 64 an, aus dem der Boden 52 des Trogteils 51 gebildet wird. Dieser Flächenabschnitt 64 hat parallel zum Mittelteil 62 eine Abmessung, die um ein bestimmtes Maß größer als die Breite des Bodens 52 ist. Senkrecht dazu hat der zusätzliche Flächenabschnitt 64 eine Abmessung die zumindest annähernd gleich der Länge des Bodens 52 ist. Der untere Rand 65 des zusätzlichen Flächenabschnittes 64 ist gerade. Die beiden Seitenränder 47 und 48 haben vom unteren Rand 65 aus zunächst einen geradlinigen Verlauf. Kurz vor dem Mittelteil 62 verlaufen sie einwärtsgekrümmt.

Der Fertigungsablauf zur Herstellung der Formungsvorrichtung 50 aus dem Zuschnitt 61 ist ähnlich dem zur Herstellung der Formungsvorrichtung 30.

Zunächst wird der eine Schenkel des Zuschnittes 61, beispielsweise derjenige mit dem Flächenabschnitt 55 und dem Spannteil 59, vorzugsweise um ein Formwerkzeug herum umgebogen, bis diese beiden Flächenabschnitte parallel zum Flächenabschnitt 54 und zum Spannteil 58 ausgerichtet sind (Fig. 14).

In einem zweiten Schritt wird der am Längenabschnitt 56 anschließende zusätzliche Flächenabschnitt 44 zu den ihm benachbarten beiden Flächenabschnitten 54 und 55 hin umgebogen, bis er an deren unterem Rand anliegt (Fig. 15 und 16). Dabei ragen die Flächenteile 68 und 69, um die der zusätzliche Flächenabschnitt 64 breiter als der Boden 52 des Trogteils 51 ist, über den Rand der seitlichen Längenabschnitte 54 und 55 hinaus. Diese Flächenteile 68 und 69 werden zu dem ihnen benachbarten Längenabschnitt 54 bzw. 55 hin so weit umgebogen, daß sie daran anliegen (Fig. 17 und 18).

In einem letzten Verfahrensschritt werden die Flächenteile 68 und 69 mit dem ihnen jeweils benachbarten Längenabschnitt 54 bzw. 55 fest verbunden. Auch hierfür wird zweckmäßigerweise ein Ultraschall-Schweißverfahren angewendet, bei dem die auf die Außen- bzw. Innenform des Trogteils 51 abgestimmten Schweißbacken nach dem Erweichen des Werkstoffes an den Schweißstellen so weit zusammengepreßt werden, daß ihr verbleibender lichter Abstand zumindest annähernd gleich der gewünschten Wanddicke des Trogteils 51 ist. Dadurch erhält der Trogteil 51 eine allseits glatte Wandung.

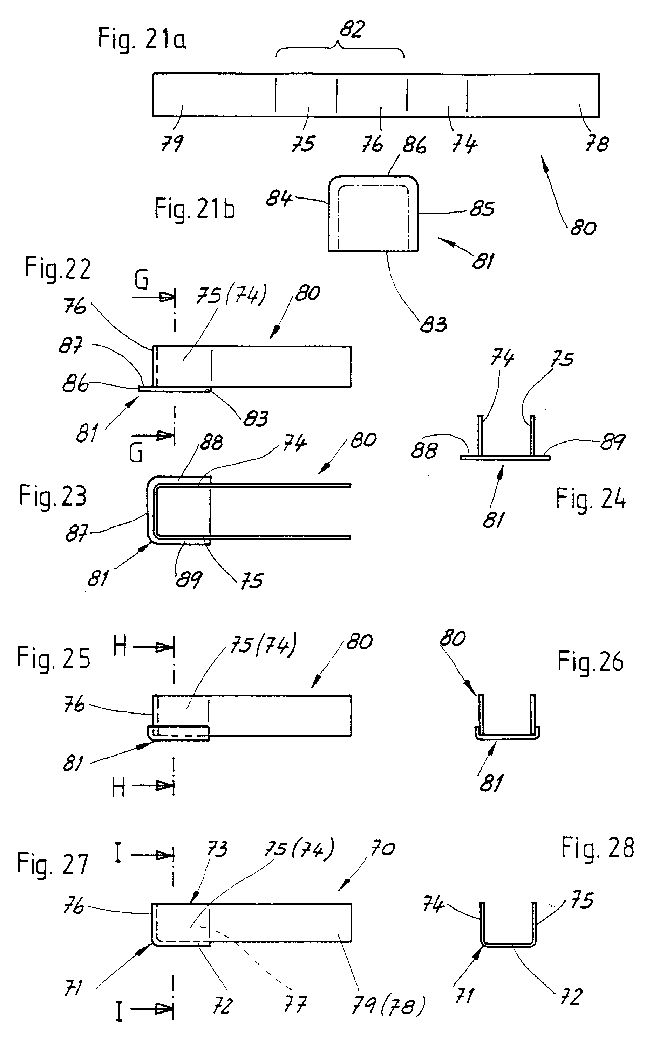

Die Formungsvorrichtung 70 (Fig. 27) ist im Endzustand gleich der Formungsvorrichtung 50 ausgebildet. Sie weist einen Trogteil 71 auf, der durch einen Boden 72 und eine Umfangswand 73 gebildet wird. Die Abschnitte 74 ... 76 der Umfangswand 73 umschließen auch hier einen quaderförmigen Innenraum des Trogteils 71. Auch dieser Trogteil 71 hat an der vom stirnseitigen Abschnitt 76 abgekehrten Seite eine offene Stelle 77. An die beiden seitlichen Abschnitte 74 und 75 schließen wieder je ein Spannteil 78 bzw. 79 an.

Anders als die Formungsvorrichtung 50 ist die Formungsvorrichtung 70 aus zwei Zuschnitten, und zwar dem ersten Zuschnitt 80 und dem zweiten Zuschnitt 81, hergestellt (Fig. 21a und 21b).

Der erste Zuschnitt 80 hat die Form eines langgestreckten geraden Streifens. Die in der Mitte des Zuschnittes 80 gelegenen Längenabschnitte 74 ... 76, aus denen die entsprechenden Abschnitte der Umfangswand 73 hervorgehen, bilden wiederum den Mittelteil 82 des Zuschnittes 80. Der zweite Zuschnitt 81 hat die Grundrißform eines Rechteckes, bei dem an einer Seite die Ecken abgerundet sind, wie das bei dem zusätzlichen Flächenabschnitt 64 am Zuschnitt 61 der Fall ist. Der von den abgerundeten Ecken abgekehrte hintere Rand 83 ist gerade. Die beiden daran anschließenden seitlichen Ränder 85 und 86 sowie der vordere Rand 86 sind bis auf die Abrundung an den Ecken ebenfalls gerade.

Aus dem zweiten Zuschnitt 81 wird der Boden 72 des Trogteils 71 gebildet, der in Fig. 21b durch eine Strichpunktlinie angedeutet ist. Dieser Zuschnitt 81 hat in der Richtung parallel zu dem Rand 86 mit den abgerundeten Ecken eine Abmessung, die um ein bestimmtes Maß größer als die Breite des Bodens 72 ist. Senkrecht dazu, d.h. in Richtung parallel zu den Rändern 84 und 85, hat der Zuschnitt 81 eine Abmessung, die um ein bestimmtes Maß größer als die Länge des Bodens 72 ist.

Der Fertigungsablauf zur Herstellung der Formungsvorrichtung 70 aus den beiden Zuschnitten 80 und 81 weicht anfänglich von dem zur Herstellung der Formungsvorrichtung 50 ab.

Zunächst wird der Zuschnitt 80, vorzugsweise um ein Formwerkzeug herum, zu einer U-Form gebogen oder gefaltet, bis seine beiden seitlichen Flächenabschnitte 74 und 75 parallel zueinander ausgerichtet sind. Danach wird der zweite Zuschnitt 81 am U-förmig gebogenen ersten Zuschnitt 80 so angelegt, daß der vordere Rand 86 mit den beiden abgerundeten Ecken parallel zum mittleren Längenabschnitt 76 ausgerichtet ist. In der Längsrichtung ist der zweite Zuschnitt 81 so angeordnet, daß sein hinterer Rand 83 mit der (theoretischen) Begrenzungslinie der seitlichen Flächenabschnitte 74 und 75 fluchtet (Fig. 22) und dadurch ein schmaler Flächenteil 87 über den unteren Rand des mittleren Flächenabschnittes 76 hinausragt (Fig. 22 und 23). In der Querrichtung ist der zweite Zuschnitt 81 mittig zur Längsmittellinie des Zuschnittes 80 angeordnet, so daß beiderseits je ein schmaler Flächenteil 88 und 89 über den unteren Rand des seitlichen Flächenabschnittes 74 bzw. 75 nach außen hinausragt (Fig. 23 und 24).

Im nächsten Schritt werden die drei Flächenteile 87 ... 89, vorzugsweise um ein Formwerkzeug herum, zu dem ihnen benachbarten Längenabschnitt 76 bzw. 74 bzw. 75 hin so weit umgebogen, daß sie daran anliegen (Fig. 25 und 26).

In einem letzten Verfahrensschritt werden die Flächenteile 87 ... 89 mit dem ihnen jeweils benachbarten Längenabschnitt fest verbunden. Auch hierfür wird zweckmäßigerweise ein Ultraschall-Schweißverfahren angewendet, bei dem die auf die Außen- bzw. Innenform des Trogteils 71 abgestimmten Schweißbacken nach dem Erweichen des Werkstoffes an den Schweißstellen so weit zusammengepreßt werden, daß ihr verbleibender lichter Abstand zumindest annähernd gleich der gewünschten Wanddicke des Trogteils 71 ist (Fig. 27 und 28). Dadurch erhält der Trogteil 71 eine glatte Wandung.

## Patentansprüche

1. Formungsvorrichtung für Zahnfüllungen mit den Merkmalen:
- es ist ein Trogteil (31) mit Boden (32) vorhanden,
- der Trogteil (31) weist eine Umfangswand (33) auf, die den Innenraum des Trogteils (31) auf einem Teil seines Umfanges außen umgibt und die an ihrem unteren Rand an dem Boden (32) anschließt,
- an den beiden Enden der Umfangswand (33) schließt an diese je ein streifenförmiger Spannteil (38; 39) an.
**gekennzeichnet** durch die Merkmale:
- die einzelnen Teile (31; 32; 33; 38; 39) der Formungsvorrichtung (30) sind als Flächenabschnitte eines ursprünglich ebenen und näherungsweise streifenförmigen Zuschnittes (41) ausgebildet,
- - von dem ein mittlerer Teil (Mittelteil 42) eine Breite hat, die zumindest annähernd gleich der Höhe der Umfangswand (33) des Trogteils (31) ist,
- - von dem je ein Flächenabschnitt als einer der streifenförmigen Spannteile (38; 39) an je einem der Enden des Mittelteils (42) in der Längsrichtung daran anschließt,
- - von dem ein zusätzlicher Flächenabschnitt (44) für den Boden (32) des Trogteils (31) an einem der Längenabschnitte (34) des Mittelteils (42) seitlich anschließt und zumindest senkrecht zum Rand dieses Längenabschnittes (34) eine Breite hat, die größer als die in der gleichen Richtung gemessene Abmessung des Bodens (32) des Trogteils (31) ist,
- der Mittelteil (42) ist mit U-förmigem Grundriß angeordnet, so daß seine beiden äußeren Längenabschnitte (34; 35) mit Abstand einander gegenüberstehen,
- der zusätzliche Flächenabschnitt (44) ist in einer an den Rändern des Mittelteils (42) anliegenden Stellung mit diesen Rändern fest verbunden.

2. Formungsvorrichtung für Zahnfüllungen mit den Merkmalen:
- es ist ein Trogteil (71) mit Boden (72) vorhanden,
- der Trogteil (71) weist eine Umfangswand (73) auf, die den Innenraum des Trogteils (71) auf einem Teil seines Umfanges außen umgibt und die an ihrem unteren Rand an dem Boden (72) anschließt,
- an den beiden Enden der Umfangswand (73) schließt an diese je ein streifenförmiger Spannteil (78; 79) an.
**gekennzeichnet** durch die Merkmale:
- die einzelnen Teile (71; 72; 73; 78; 79) der Formungsvorrichtung (70) sind als Flächenabschnitte eines ursprünglich ebenen und näherungsweise streifenförmigen ersten Zuschnittes (80) und eines ebenfalls ursprünglich ebenen und zumindest annähernd rechteckigen zweiten Zuschnittes (81) ausgebildet,
- - wobei von den Flächenabschnitten des ersten Zuschnittes (80)
- - - ein mittlerer Teil (Mittelteil 82) eine Breite hat, die zumindest annähernd gleich der Höhe der Umfangswand (73) des Trogteils (71) ist und
- - - je ein Flächenabschnitt als einer der streifenförmigen Spannteile (78; 79) an je einem der Enden des Mittelteils (82) in der Längsrichtung daran anschließt,
- - wobei die Flächenabschnitte des zweiten Zuschnittes (81) zusammen eine Länge haben, die um ein bestimmtes Maß größer als die Länge des Trogteils (71) ist, und eine Breite haben, die um ein bestimmtes Maß größer als die Breite des Bodens (72) des Trogteils (71) ist,
- der Mittelteil (82) des ersten Zuschnittes (80) ist mit U-förmigem Grundriß angeordnet, so daß seine beiden äußeren Längenabschnitte (74; 75) mit Abstand einander gegenüberstehen,
- von dem zweiten Zuschnitt (81) sind in einer an den Rändern des Mittelteils (82) anliegenden Stellung die über die Abmessungen des Bodens (72) hinausgehenden Flächenteile (87; 88; 89) mit dem Mittelteil (82) fest verbunden.

3. Formungsvorrichtung nach Anspruch 1 oder 2
**gekennzeichnet** durch das Merkmal:
- der mittlere Längenabschnitt (36) des Mittelteils (42) hat in einer ebenen Abwicklung zumindest annähernd die Form eines Trapezes oder eines Kreisringabschnittes.

4. Verfahren zum Herstellen der Formungsvorrichtung, insbesondere nach Anspruch 1,
**gekennzeichnet** durch die Verfahrensschritte:
- aus einem Blatt oder einer Bahn des Werkstoffes für die Formungsvorrichtung wird ein zumindest näherungsweise streifenförmiger Zuschnitt (61) ausgeschnitten,
- - der einen Mittelteil (62) für den Trogteil (51) aufweist, an dessen beiden Enden je ein streifenförmiger Spannteil (58; 59) anschließt,
- - dessen Mittelteil (62) eine Breite hat, die zumindest annähernd gleich der Höhe der Umfangswand (53) des Trogteils (51) ist,
- - bei dem an einem der Längenabschnitte (56) des Mittelteils (62) ein zusätzlicher Flächenabschnitt (64) für den Boden (52) des Trogteils (51) anschließt, dessen Abmessungen wenigstens in einer Richtung größer sind als die in der gleichen Richtung gemessene Abmessung des Bodens (52) des Trogteils (51),
- der Mittelteil (62) wird, vorzugsweise um ein Formwerkzeug herum, zu einer U-Form gebogen und/oder gefaltet,
- der zusätzliche Flächenabschnitt (64) wird, vorzugsweise um ein Formwerkzeug herum, zu dem gegenüberliegenden Längenabschnitt bzw. zu den benachbarten Längenabschnitten (54; 55) des Mittelteils (62) hin umgebogen und/oder umgefaltet,
- diejenigen Flächenteile (68; 69) des zusätzlichen Flächenabschnittes (64), die über den ihnen zugekehrten Rand der benachbarten Längenabschnitte (54; 55) des Mittelteils (62) hinausragen, werden, vorzugsweise um ein Formwerkzeug herum, weiter umgebogen und/oder umgefaltet, bis sie an dem benachbarten Längenabschnitt (54; 55) anliegen, und anschließend mit diesem Längenabschnitt fest und dauerhaft verbunden.

5. Verfahren zum Herstellen der Formungsvorrichtung, insbesondere nach Anspruch 2,
**gekennzeichnet** durch die Verfahrensschritte:
- aus einem Blatt oder einer Bahn des Werkstoffes für die Formungsvorrichtung werden ein zumindest näherungsweise streifenförmiger erster Zuschnitt (80) und ein zumindest näherungsweise rechteckiger zweiter Zuschnitt (81) ausgeschnitten,
- - von denen der erste Zuschnitte (80) einen Mittelteil (82) für die Umfangswand (73) des Trogteils (71) aufweist, an dessen beiden Enden je ein streifenförmiger Spannteil (78; 79) anschließt,
- - dessen Mittelteil (82) eine Breite hat, die zumindest annähernd gleich der Höhe der Umfangswand (73) des Trogteils (71) ist,
- - von denen der zweite Zuschnitt (81) eine Länge hat, die um ein bestimmtes Maß größer als die Länge des Trogteils (71) ist, und eine Breite hat, die um ein bestimmtes Maß größer als die Breite des Bodens (72) des Trogteils (71) ist,
- der Mittelteil (82) wird, vorzugsweise um ein Formwerkzeug herum, zu einer U-Form gebogen und/oder gefaltet,
- der zweite Zuschnitt (81) wird am unteren Rand des Mittelteils (82) angelegt, wobei in der Längsrichtung der überstehende Flächenteil (87) gegenüber der offenen Stelle (77) des Trogteils (71) über den Rand des Mittelteils (82) hinausragt und wobei in der Querrichtung der überstehende Flächenteil (88; 89) je zur Hälfte über den Rand des Mittelteils (82) hinausragt,
- die überstehenden Flächenteile (87; 88; 89) des zweiten Zuschnittes (81), die über den Rand der benachbarten Längenabschnitte (76; 74; 75)) des Mittelteils (82) hinausragen, werden, vorzugsweise um ein Formwerkzeug herum, zu den benachbarten Längenabschnitten (76; 74; 75) des Mittelteils (82) hin umgebogen und/oder umgefaltet, und zwar so weit, bis sie an dem benachbarten Längenabschnitt (76; 74; 75) anliegen, und anschließend mit diesem Längenabschnitt fest und dauerhaft verbunden.

6. Verfahren nach Anspruch 4 oder 5, bei dem ein thermoplastischer Werkstoff für die Formungsvorrichtung verwendet wird,
**gekennzeichnet** durch die Verfahrensschritte:
- die über den ihnen zugekehrten Rand der benachbarten Längenabschnitte (54, 55; 76, 74, 75) des Mittelteils (62; 82) hinausragenden Flächenteile (68; 69) des zusätzlichen Flächenabschnittes (64) bzw. die entsprechenden Flächenteile (87; 88; 89) des zweiten Zuschnittes (81) werden mit diesen Längenabschnitten (54, 55; 76, 74, 75) verschweißt,
- bevorzugt wird ein Ultraschall-Schweißverfahren angewandt,
- bevorzugt werden die auf die Außen- bzw. Innenform des Trogteils (51; 71) abgestimmten Schweißbacken nach dem Erweichen des Werkstoffes an den Schweißstellen unter Krafteinwirkung einander angenähert, bis sie einen lichten Abstand haben, der zumindest annähernd gleich der gewünschten Wanddicke des Trogteils (51; 71) ist.

## Claims

1. Shaping device for dental fillings having the features:
- there is a trough part (31) with base (32) present,
- the trough part (31) comprises a peripheral wall (33) which externally surrounds the inner space of the trough part (31) over a part of the periphery thereof and which at its bottom edge adjoins the base (32),
- at the two ends of the peripheral wall (33), adjoining the latter, there is in each case a strip-shaped gripping part (38; 39),
characterised by the features:
- the individual parts (31; 32; 33; 38; 39) of the shaping device (30) take the form of area sections of an originally plane and approximately strip-shaped blank (41),
- - of which a middle part (mid-part 42) has a width which is at least roughly equal to the height of the peripheral wall (33) of the trough part (31),
- - of which in each case one area section, as one of the strip-shaped gripping parts (38; 39), adjoins in each case one of the ends of the mid-part (42) in the longitudinal direction,
- - of which an additional area section (44) for the base (32) of the trough part (31) laterally adjoins one of the length sections (34) of the mid-part (42) and at least perpendicularly to the edge of this length section (34) has a width which is greater than the dimension, measured in the same direction, of the base (32) of the trough part (31),
- the mid-part (42) in arranged with a U-shaped plan, so that its two outer length sections (34; 35) are situated at a distance opposite each other,
- the additional area section (44) is, in a position lying against the edges of the mid-part (42), fixedly joined to these edges.

2. Shaping device for dental fillings having the features:
- there is a trough part (71) with base (72) present,
- the trough part (71) comprises a peripheral wall (73) which externally surrounds the inner space of the trough part (71) over a part of the periphery thereof and which at its bottom edge adjoins the base (72),
- at the two ends of the peripheral wall (73), adjoining the letter, there is in each case a strip-shaped gripping part (78; 79),
characterised by the features:
- the individual parts (71; 72; 73; 78; 79) of the shaping device (70) take the form of area sections of an originally plane and approximately strip-shaped first blank (80) and of a likewise originally plane and at least roughly rectangular second blank (81),
- - of the area sections of the first blank (80),
- - - a middle part (mid-part 82) having a width which is at least roughly equal to the height of the peripheral wall (73) of the trough part (71) and
- - - in each case one area section, an one of the strip-shaped gripping parts (78; 79), adjoining in each case one of the ends of the mid-part (82) in the longitudinal direction,
- - the area sections of the second blank (81) together having a length which is greater by a certain extent than the length of the trough part (71), and having a width which is greater by a certain extent than the width of the base (72) of the trough part (71),
- the mid-part (82) of the first blank (80) is arranged with a U-shaped plan, so that its two outer length sections (74; 75) are situated at a distance opposite each other,
- of the second blank (81), in a position lying against the edges of the mid-part (82), the area parts (87; 88; 89) exceeding the dimensions of the base (72) are fixedly joined to the mid-part (82).

3. Shaping device according to Claim 1 or 2
characterised by the feature:
- the middle length section (36) of the mid-part (42) has, in a plane development, at least roughly the shape of a trapezium or a segment of an annulus.

4. Process for the production of the shaping device, in particular according to Claim 1,
characterised by the process steps:
- from a sheet or web of the material for the shaping device, an at least approximately strip-shaped blank (61) is cut out,
- - which comprises a mid-part (62) for the trough part (51), the two ends of which mid-part (62) are adjoined in each case by a strip-shaped gripping part (58; 59),
- - the mid-part (62) of which has a width which in at least roughly equal to the height of the peripheral wall (53) of the trough part (51),
- - in which one of the length sections (56) of the mid-part (62) in adjoined by an additional area section (64) for the base (52) of the trough part (51), the dimensions of which area section (64) are greater at least in one direction than the dimension, measured in the same direction, of the base (52) of the trough part (51),
- the mid-part (62) is bent and/or folded, preferably around a shaped die, into a U-shape,
- the additional area section (64) is bent up and/or folded up, preferably around a shaped die, towards the opposite length section and towards the adjacent length sections (54; 55) of the mid-part (62), respectively,
- those area parts (68; 69) of the additional area section (64) which project beyond the edge, facing them, of the adjacent length sections (54; 55) of the mid-part (62) are bent up and/or folded up further, preferably around a shaped die, until they lie against the adjacent length section (54; 55), and are then fixedly and permanently joined to this length section.

5. Process for the production of the shaping device, in particular according to Claim 2,
characterised by the process steps:
- from a sheet or web of the material for the shaping device, an at least approximately strip-shaped first blank (80) and an at least approximately rectangular second blank (81) are cut out,
- - of which the first blank (80) comprises a mid-part (82) for the peripheral wall (73) of the trough part (71), the two ends of which mid-part are adjoined in each case by a strip-shaped gripping part (78; 79),
- - the mid-part (82) of which has a width which is at least roughly equal to the height of the peripheral wall (73) of the trough part (71),
- - of which the second blank (81) has a length which is greater by a certain extent than the length of the trough part (71), and has a width which is greater by a certain extent than the width of the base (72) of the trough part (71),
- the mid-part (82) is bent and/or folded, preferably around a shaped die, into a U-shape,
- the second blank (81) is laid against the bottom edge of the mid-part (82), with, in the longitudinal direction, the protruding area part (87) projecting, with respect to the open place (77) of the trough part (71), beyond the edge of the mid-part (82) and, in the transverse direction, the protruding area part (88; 89) projecting in each case half beyond the edge of the mid-part (82),
- the protruding area parts (87; 88; 89) of the second blank (81) which project beyond the edge of the adjacent length sections (76; 74; 75) of the mid-part (82) are bent up and/or folded up, preferably around a shaped die, towards the adjacent length sections (76; 74; 75) of the mid-part (82), to be precise up until they lie against the adjacent length section (76; 74; 75), and are then fixedly and permanently joined to this length section.

6. Process according to Claim 4 or 5, in which a thermoplastic material is used for the shaping device,
characterised by the process steps:
- the area parts (68; 69) of the additional area section (64) and the corresponding area parts (87; 88; 89) of the second blank (81) which project beyond the edge, facing them, of the adjacent length sections (54, 55; 76, 74, 75) of the mid-part (62; 82), respectively, are welded to these length sections (54, 55; 76, 74, 75),
- preferably an ultrasonic welding process is employed,
- preferably the welding jaws, which are matched to the external and internal shape of the trough part (51; 71), are brought close to one another under the effect of force, after the softening of the material at the welding points, until they have a clear spacing which is it least roughly equal to the desired wall thickness of the trough part (51; 71).

## Revendications

1. Dispositif de moulage pour des plombages de dents ayant les caractéristiques suivantes :
- une partie en forme de cuvette (31) avec un fond (32),
- la partie en forme de cuvette (31) présente une paroi périphérique (33) qui entoure le volume intérieur de la partie en forme de cuvette (31), sur une fraction de sa périphérie et relie le fond (32) par son bord inférieur,
- les deux extrémités de la paroi périphérique (33) se poursuivent chacune par une partie de serrage (38, 39) en forme de bande,
caractérisé en ce que :
- les différentes parties (31, 32, 33, 38, 39) du dispositif de moulage (30) sont constituées à partir de segments de surface d'un flan (41) approximativement en forme de bande, initialement plane,
- - dont une partie médiane (partie médiane 42) a une largeur au moins approximativement égale à la hauteur de la paroi périphérique (33) de la partie en forme de cuvette (31),
- - dont chaque fois un segment de surface se poursuit par une partie de serrage en forme de bande (38, 39) à chacune des extrémités de la partie médiane (42), dans la direction longitudinale,
- - dont un segment de surface (44) supplémentaire pour le fond (32) de la partie en forme de cuvette (31) est relié latéralement à l'un des segments de longueur (34) de la partie médiane (42) et présente au moins perpendiculairement au bord de ce segment de longueur (34) une largeur supérieure à la dimension du fond (32) de la partie en forme de cuvette (31), dimension mesurée dans la même direction,
- la partie médiane (42) a en vue en plan une forme en U de sorte que ses deux segments de longueur extérieurs (34, 35) sont en regard l'un de l'autre avec une certaine distance,
- le segment de surface complémentaire (44) est relié solidairement aux bords de la partie médiane (42).

2. Dispositif de moulage pour les plombages de dent, comprenant les caractéristiques suivantes :
- une partie en forme de cuvette (71) avec un fond (72)
- la partie en forme de cuvette (71) présente une paroi périphérique (73) qui entoure extérieurement la cavité intérieure de la partie en forme de cuvette (71) sur une partie de sa périphérie et dont le bord inférieur relie le fond (72),
- les deux extrémités de la paroi périphérique (73) se poursuivent par une partie de serrage (78, 79), chacune en forme de bande,
caractérisé en ce que :
- les différentes parties (71, 72, 73, 78, 79) du dispositif de moulage (70) sont des segments de surface d'un premier flan (80) approximativement en forme de bande, initialement plan, et d'un second segment (81) approximativement rectangulaire, également initialement plan,
- - les segments de surface du premier flan (80)
- - - ayant une partie médiane (partie médiane 82) d'une largeur au moins approximativement égale à la hauteur de la paroi périphérique (73) de la partie en forme de cuvette (71), et
- - - chaque fois un segment de surface relie dans la direction longitudinale sous la forme chaque fois d'une partie de serrage (78, 79) en bande, chaque extrémités de la partie médiane (82),
- - les segments de surface du second flan ((81) ont, en tout une longueur qui dépasse d'une certaine mesure la longueur de la partie en forme de cuvette (71) et ont une largeur qui dépasse d'une certaine dimension la largeur du fond (72) de la partie en forme de cuvette (71),
- la partie médiane (82) du premier flan (80) a en vue en plan une forme de U, de sorte que ses deux segments de longueur, extérieurs (74, 75) sont en regard l'un de l'autre avec une certaine distance,
- dans une position adjacente aux bords de la partie médiane (82), les parties de surface (87, 88, 89) qui dépassent des dimensions du fond (72), pour le second flan (81), sont reliées solidairement à la partie médiane (82).

3. Dispositif de moulage selon les revendications 1 ou 2, caractérisé en ce que :
- le segment longitudinal médian (36) de la partie médiane (42) a, en développement plan, au moins approximativement la forme d'un trapèze ou d'un segment d'anneau de cercle.

4. Procédé de fabrication du dispositif de moulage notamment selon la revendication 1, caractérisé par les étapes suivantes :
- à partir d'une feuille ou d'une bande de matière pour le dispositif de moulage, on découpe un flan (61) ayant au moins approximativement une forme de bande,
- - qui présente une partie médiane (62) pour la partie de fond (51), dont les deux extrémités se poursuivent, chaque fois, par une partie de serrage (58, 59) en forme de bande,
- - dont la partie médiane (62) a une largeur au moins approximativement égale à la hauteur de la paroi périphérique (53) de la partie en forme de cuvette (51),
- - dont à l'un des segments de longueur (56) de la partie médiane (62), se raccorde un segment de surface (64) supplémentaire pour le fond (52) de la partie en forme de cuvette (51) dont les dimensions, au moins dans une direction, sont supérieures à celles du fond (52) de la partie en forme de cuvette (51), mesurée dans la même direction,
- la partie médiane (62) est cintrée et/ou pliée de préférence autour d'un outil de formage pour lui donner une forme de U,
- le segment de surface supplémentaire (64) est cintré et/ou replié de préférence autour d'un outil de formage vers le segment de longueur en regard ou les segments de longueur voisins (54, 55) de la partie médiane (62),
- les parties de surface (68, 69) du segment de surface complémentaire (64), qui dépassent du bord correspondant des segments de longueur voisins (54, 55) de la partie médiane (62), sont cintrées et/ou repliées en plus de préférence autour d'un outil de formage jusqu'à s'appliquer contre le segment de longueur voisin (54, 55) puis elles sont reliées solidairement et de manière permanente avec ce segment de longueur.

5. Procédé de fabrication du dispositif de moulage notamment selon la revendication 2, caractérisé par les étapes de procédé suivantes :
- dans une feuille ou une bande de matière pour le dispositif de moulage, on découpe un premier flan (80) au moins approximativement en forme de bande et un second flan (81) au moins approximativement rectangulaire,
- - parmi lesquels le premier flan (80) comporte une partie médiane (82) pour la paroi périphérique (73) de la partie en forme de cuvette (71) et dont les deux extrémités se poursuivent chacune par une partie de serrage (78, 79) en forme de bande,
- - dont la partie médiane (82) a une largeur au moins approximativement égale à la hauteur de la paroi périphérique (73) de la partie en forme de cuvette (71),
- - dont le second flan (81) a une longueur qui dépasse d'une certaine valeur la longueur de la partie en forme de cuvette (71) et possède une largeur qui dépasse d'une certaine dimension la largeur du fond (72) de la partie en forme de cuvette (71),
- la partie médiane (82) est cintrée et/ou repliée de préférence autour d'un outil de formage, en forme de U.
- le second flan (81) est appliqué contre le bord inférieur de la partie médiane (82), la partie de surface (87) qui dépasse dans la direction longitudinale par rapport à la zone ouverte (77) de la partie en forme de cuvette (71) par dessus le bord de la partie médiane (82) et, dans la direction transversale, la partie de surface (88, 89) dépasse chaque fois de moitié par-dessus le bord de la partie médiane (82),
- les parties de surface en saillie (87, 88, 89) du second flan (81) qui dépasse du bord des segments de longueur voisins (76, 74, 75) de la partie médiane (82) sont cintrées et/ou repliées de préférence autour d'un outil de formage vers les segments de longueur voisins (76, 74, 75) de la partie médiane (82) et cela jusqu'à ce que ces parties s'appuient contre le segment de longueur voisin (76, 74, 75) pour être enfin reliées solidairement et de manière permanente à ce segment de longueur.

6. Procédé selon les revendications 4 ou 5, utilisant une matière thermoplastique pour le dispositif de formage, caractérisé par les étapes de procédé suivantes :
- on soude les parties de surface (68, 69) du segment de surface complémentaire (64) ou les parties de surface correspondantes (87, 88, 89) du second flan (81) dépassant par dessus le bord arrière des segments de longueur voisins (54, 55 ; 76, 74, 75) de la partie médiane (62, 82) sur les segments de longueur (54, 55 ; 76, 74, 75),
- on utilise, de préférence, un procédé de soudage par ultrasons,
- les mâchoires de soudage de forme adaptées à la forme extérieure ou intérieure de la partie en forme de cuvette (51 71) sont de préférence rapprochées par l'action d'une force une fois le matériau ramolli au niveau des points de soudage, jusqu'à arriver à un intervalle libre qui est au moins approximativement égal à l'épaisseur souhaitée de la partie en forme de cuvette (51, 71).
